# EUROPÄISCHE PATENTSCHRIFT

(11) **EP 3 194 166 B1**
(45) Veröffentlichungstag und Bekanntmachung des Hinweises auf die Patenterteilung: **22.08.2018**
(21) Anmeldenummer: 15763922.0
(22) Anmeldetag: 16.09.2015
(51) Int. Cl.: B32B 27/40, B32B 25/08

(54) **ZUMINDEST TEILWEISE AUS EINEM SCHICHTAUFBAU AUFGEBAUTES BAUTEIL UND VERFAHREN ZU SEINER HERSTELLUNG**
STRUCTURAL PART WHICH IS AT LEAST PARTIALLY COMPOSED OF A LAYER ARRANGEMENT AND METHOD FOR MANUFACTURING THE SAME
ELLEMENT STRUCTUREL POSÉ AU MOINS PARTIELLEMENT HORS D'UNE STRUCTURE DE COUCHES ET SON PROCÉDÉ DE FABRICATION

(30) Priorität: 19.09.2014 EP 14185609
(43) Veröffentlichungstag der Anmeldung: 26.07.2017
(73) Patentinhaber: BASF SE, 67056 Ludwigshafen (DE)
(72) Erfinder: REDL, Franz Xaver, 49448 Lemförde (DE); LEBERFINGER, Marcus, 49124 Georgsmarienhütte (DE); PROZESKE, Timo, 49448 Stemshorn (DE); WERTHER, Sonja, 49453 Wetschen (DE); ROLFSEN, Christine, 49086 Osnabrück (DE); GRUIDL, Thomas, 9781 Oberdrauburg (AT); ASSMAIR, Harald, 9972 Virgen (AT)
(74) Vertreter: BASF IP Association
(86) Internationale Anmeldenummer: PCT/EP2015/071220
(87) Internationale Veröffentlichungsnummer: WO 2016/042028

(56) Entgegenhaltungen:
- EP-A1- 1 172 203
- DE-A1-102005 023 320
- DE-A1-102011 114 494
- P.J SLIKKERVEER ET AL: "Erosion of elastomeric protective coatings", WEAR, Bd. 236, Nr. 1-2, 1. Dezember 1999 (1999-12-01), Seiten 189-198, XP055235644, CH ISSN: 0043-1648, DOI: 10.1016/S0043-1648(99)00268-9
- DEKA H ET AL: "Bio-based hyperbranched polyurethanes for surface coating applications", PROGRESS IN ORGANIC COATINGS, ELSEVIER BV, NL, Bd. 66, Nr. 3, 1. November 2009 (2009-11-01), Seiten 192-198, XP026640659, ISSN: 0300-9440, DOI: 10.1016/J.PORGCOAT.2009.07.005 [gefunden am 2009-08-18]
- Norbert Adam ET AL: "Polyurethanes" In: "Ullmann's Encyclopedia of Industrial Chemistry", 15. Januar 2005 (2005-01-15), Wiley-VCH Verlag GmbH & Co. KGaA, Weinheim, Germany, XP055040306, ISBN: 978-3-52-730673-2 DOI: 10.1002/14356007.a21_665.pub2, Seite 579

## Beschreibung

Die Erfindung betrifft ein Bauteil, das zumindest teilweise aus einem Schichtaufbau aufgebaut ist. Weiterhin betrifft die Erfindung ein Verfahren zur Herstellung eines solchen Bauteils.

Aus einem Schichtaufbau aufgebaute Bauteile, die eine Elastomerschicht und eine Duromerschicht enthalten, können insbesondere eingesetzt werden in Anwendungen, bei denen das Bauteil aufprallenden Objekten ausgesetzt wird. Durch die Elastomerschicht wird der Aufprall gedämpft und mögliche Verformungen bilden sich wieder zurück.

Zudem können durch die passende Auswahl der Materialien für die einzelnen Schichten die Materialeigenschaften für das Bauteil angepasst werden, so dass dieses den im jeweiligen Einsatz auftretenden Beanspruchungen widerstehen kann.

Entsprechende aus einem Schichtaufbau aufgebaute Bauteile werden zum Beispiel in der Montanindustrie, beispielsweise als Spiralseparator oder als Kegel oder Schütteltisch in der Schwerkraftaufbereitung, eingesetzt. Entsprechende Bauteile sollen möglichst abnutzungsresistent sein, um eine lange Lebensdauer zu gewährleisten. Aus DE-A 40 07 569 ist ein Herstellungsverfahren für Ausrüstung zur Mineralientrennung bekannt, bei dem ein Bauteil aus einem Schichtverbund aufgebaut ist, der eine Schicht aus glasfaserverstärktem Polymer und eine weitere Schicht aus einem darauf aufgesprühten Polyurethan umfasst. Nachteil ist jedoch, dass sowohl die glasfaserverstärkte Polymerschicht als auch die Polyurethanschicht im Allgemeinen spröde sind und insbesondere bei Aufprallbeanspruchung brechen können.

Ein mehrschichtiges, flächiges Formteil ist auch aus DE-A 196 33 479 bekannt. Dieses umfasst eine Tragschicht und eine Sichtseite und kann zum Beispiel für Sanitärobjekte verwendet werden oder im Wohnwagenbau oder im Bootsbau eingesetzt werden. Die Tragschicht besteht aus einer verstärkten Polyurethan-Schicht und die Sichtseite aus einer Polyurethan-Lackschicht. Die beschriebenen Formteile können als Außenverkleidung eingesetzt werden, so dass hier insbesondere eine ausreichende Stabilität gegen erhöhte Materialbeanspruchung durch Aufprall und Schleifen nicht gegeben ist.

Sanitärartikel, die aus einem Schichtaufbau aufgebaut sind, sind auch aus DE-A 10 2010 043 284 bekannt, wobei die Sanitärartikel eine Thermoplastfolie und Polyurethan-Verstärkungsschichten umfassen.

Nachteil aller bekannten Bauteile ist, dass diese insbesondere gegen Beanspruchung durch Aufprall und Schleifen nur begrenzt beständig sind und zu Splitterbrüchen neigen oder permanent verformt werden.

Aufgabe der vorliegenden Erfindung ist es daher, ein Bauteil und ein Verfahren zu seiner Herstellung bereitzustellen, das die aus dem Stand der Technik bekannten Nachteile nicht aufweist und weiterhin insbesondere in der Montanindustrie, in der Herstellung von Kühlgeräten, generell als Ersatz für Oberflächen, die aus Composite oder Coil-Coating Blechen hergestellt werden, eingesetzt werden kann.

Gelöst wird die Aufgabe durch ein Bauteil, das zumindest teilweise aus einem Schichtaufbau aufgebaut ist, wobei der Schichtaufbau folgende Schichten umfasst:
(a) eine Elastomerschicht mit einer Dichte von mehr als 800 g/L,
(b) eine Duromerschicht, enthaltend mindestens 50 Gew.-% eines ersten Polyurethans.

Durch den Schichtaufbau mit einer Elastomerschicht und einer Duromerschicht wird ein Bauteil erzeugt, das insbesondere gegen Prallbeanspruchung stabil ist, da durch die Elastomerschicht Beanspruchungen durch aufprallende Gegenstände gedämpft werden. Dies zeichnet sich auch durch ein unkritischeres Bruchbild und Bruchverhalten aus, wenn das Bauteil doch einmal bis zum Bruch beansprucht werden sollte. Ein weiterer Vorteil der Elastomerschicht ist deren elastische Verformbarkeit über einen weiten Temperaturbereich, speziell bei tiefen Temperaturen, sowie ein verbessertes Verhalten gegen Abrieb.

Durch den Schichtaufbau mit Elastomerschicht und Duromerschicht wird insgesamt ein hoch schlagzäher und steifer Gesamtaufbau erzielt, der eine hohe Durchstoßfestigkeit aufweist und bei dem keine Splitterbrüche über einen breiten Temperaturbereich auftreten. Ein weiterer Vorteil des Schichtaufbaus mit Elastomerschicht und Duromerschicht ist deren hohe Wärmeformbeständigkeit. Aufgrund des eingesetzten Duromers bleibt der Aufbau auch bei hohen Temperaturen von bis zu 150°C formstabil.

Neben einem Aufbau mit nur einer Elastomerschicht und einer Duromerschicht ist es auch möglich, mehrere Elastomerschichten und Duromerschichten jeweils im Wechsel vorzusehen. Hierdurch lässt sich zum Beispiel eine größere Gesamtschichtdicke erzielen. Zudem können durch einen entsprechenden Schichtaufbau mit mehr als jeweils einer Elastomerschicht und einer Duromerschicht die mechanischen Eigenschaften weiter beeinflusst werden. So kann auch der Bauteilverzug durch den Einsatz der Duromerschicht und weiterer Elastomerschichten reduziert werden und unterschiedliche Ausdehnungskoeffizienten können aufgrund der verwendeten Elastomerschichten kompensiert werden.

Die Duromerschicht kann geschäumt oder kompakt sein. Wenn die Duromerschicht kompakt, das heißt nicht geschäumt ist, weist diese vorzugsweise eine Dichte von mehr als 800 g/L auf. Eine geschäumte Duromerschicht weist im Unterschied zum kompakten Polymer im Allgemeinen eine Dichte von weniger als 600 g/L auf. Gegenüber einer kompakten Duromerschicht hat eine geschäumte Duromerschicht aufgrund der geringeren Dichte bei vergleichbaren Eigenschaften ein geringeres Gewicht, so dass die Bauteilmasse insgesamt bei Verwendung einer geschäumten Duromerschicht verringert werden kann. Weiterhin haben geschäumte Duromerschichten einen geringeren Reaktionsschwund und erlauben damit eine exaktere Abformung der Formgeometrien unter geringerer Verzugsneigung.

Erfindungsgemäß enthält die Duromerschicht mindestens 50 Gew.-% eines ersten Polyurethans. Mehr bevorzugt enthält die Duromerschicht mindestens 75 Gew.-% eines ersten Polyurethans und insbesondere 100 Gew.-% des ersten Polyurethans.

Neben dem Polyurethan kann die Duromerschicht auch noch ein oder mehrere weitere Polymere enthalten, so dass die Duromerschicht aus einem Polymerblend aufgebaut ist. Als weitere Polymere eignen sich zum Beispiel Polyharnstoffe, Poly(meth)acrylat, Polystyrol, Polyamid, Bisphenol-A basierte Polymere oder Polymere mit einer hohen Glasübergangstemperatur, insbesondere einer Glasübergangstemperatur von mehr als 100°C. Besonders bevorzugt ist es jedoch, wenn keine weiteren Polymere enthalten sind. Das Polyurethan kann dabei sowohl aus nur einem Polyurethan aufgebaut sein als auch aus einer Mischung aus mindestens zwei verschiedenen Polyurethanen.

Vorzugsweise wird für die Duromerschicht ein Polyurethan eingesetzt, das einen Zugmodul von mehr als 400 N/mm² und eine hohe Glasübergangstemperatur von mehr als 70°C aufweist. Zudem ist es bevorzugt, wenn das Polyurethan einen geringen Schrumpf und einen geringen thermischen Längenausdehnungskoeffizienten aufweist, um die mechanische Festigkeit des Bauteils zu verbessern. Der Schrumpf ist vorzugsweise kleiner als 1 % und der thermische Längenausdehnungskoeffizient vorzugsweise maximal 110·10⁻⁶ 1/K.

Sowohl bei Einsatz einer kompakten Duromerschicht als auch bei Einsatz einer geschäumten Duromerschicht ist die Bruchdehnung der Duromerschicht vorzugsweise mindestens zehnmal niedriger als die Bruchdehnung der Elastomerschicht. Die Glasübergangstemperatur der Duromerschicht wird insbesondere so gewählt, dass diese mindestens 20°C höher ist als die maximale Nutzungstemperatur des Bauteils.

Die Eigenschaften der Duromerschicht können durch Einsatz geeigneter Additive, beispielsweise faserförmigen oder pulverförmigen Füllstoffen, Füllstoffen mit geringer Dichte, beispielsweise Glashohlkugeln, Weichmachern, Schlagzähmodifizierern, Flammschutzmitteln, Farbstoffen oder sonstigen üblicherweise in Polymeren eingesetzten Additiven eingestellt werden. Entsprechende Additive sind dem Fachmann bekannt.

Insbesondere zur Erhöhung der Steifigkeit und zur Verringerung des thermischen Längenausdehnungskoeffizienten werden im Allgemeinen faserförmige oder pulverförmige Füllstoffe eingesetzt. Faserförmige Füllstoffe können dabei als Endlosfasern, Langfasern oder Kurzfasern eingesetzt werden. Bei Einsatz von Endlosfasern ist es möglich, die einzelnen Fasern in mehreren Schichten jeweils parallel ausgerichteter Fasern anzuordnen, wobei die Ausrichtung der Fasern in den einzelnen Schichten zueinander gedreht ist. Alternativ können Endlosfasern auch als Gewebe, Gewirk, Gestrick oder Faservlies eingesetzt werden. Langfasern und Kurzfasern werden - wie auch pulverförmige Füllstoffe - dem Polymer zugemischt und liegen daher üblicherweise, abhängig vom Verarbeitungsverfahren, anisotrop in dem Polymer vor.

In einer Ausführungsform der Erfindung umfasst der Schichtaufbau zusätzlich eine Dämmschicht, wobei die Dämmschicht aus einem Hartschaum aufgebaut ist, der mindestens 80 Gew.-% Polyisocyanurat und/oder zweites Polyurethan enthält. Wenn die Dämmschicht ein zweites Polyurethan enthält, kann als zweites Polyurethan ein Polyurethan eingesetzt werden, das sich hinsichtlich der Stoffeigenschaften und des Aufbaus vom ersten Polyurethan der Duromerschicht unterscheidet. Es ist jedoch auch möglich, als erstes Polyurethan für die Duromerschicht und als zweites Polyurethan für die Dämmschicht das gleiche Polyurethan einzusetzen. Der für die Dämmschicht verwendete Hartschaum hat eine geringe Wärmeleitfähigkeit und eine niedrige Dichte, so dass das Bauteil bei Einsatz in einem Kühlgerät energieeffizient eingesetzt werden kann oder bei Auftreten von hohen Temperaturen auf der Seite der Dämmschicht die abgewandte Seite sich trotzdem nicht oder nur gering erwärmt.

Das Material für den für die Dämmschicht eingesetzten Hartschaum wird vorzugsweise so ausgerüstet, dass die Wärmeleitfähigkeit kleiner als 25 mW/(m·K) und die Dichte kleiner als 50 g/L ist.

Durch die Verwendung von Polyisocyanurat oder Polyurethan als Material für die Dämmschicht wird aufgrund eines ähnlichen chemischen Aufbaus eine gute Haftung zwischen Dämmschicht und Duromerschicht erhalten.

Um einen weiteren Oberflächenschutz zu erhalten und/oder die optischen Eigenschaften der Oberfläche zu beeinflussen, insbesondere hinsichtlich Kratzfestigkeit und Glanz, umfasst der Schichtaufbau in einer Ausführungsform zusätzlich mindestens eine Lackschicht. Die Lackschicht ist vorzugsweise aus einem Lack auf Polyurethanbasis oder Polyharnstoffbasis aufgebaut. Zur Beeinflussung der optischen Eigenschaften kann der Lack zusätzlich Farbstoffe oder Pigmente enthalten. Es können sowohl wasserbasierte als auch lösungsmittelbasierte oder lösungsmittelfreie (100%solid) Lacke verwendet werden. Durch die Verwendung von Lacken auf Polyurethanbasis oder Polyharnstoffbasis und der dadurch gegebenen chemischen Ähnlichkeit mit der Duromerschicht wird auch hier eine sehr gute Haftung erzielt.

Für eine gute Haftung der Elastomerschicht an der Duromerschicht ist es weiterhin bevorzugt, wenn die Elastomerschicht aus einem Material aufgebaut ist, das ausgewählt ist aus der Gruppe bestehend aus Homopolyurethan, Homopolyharnstoff und Copolymeren, enthaltend Polyurethan und Polyharnstoff. Um die elastomeren Eigenschaften der Elastomerschicht zu erhalten wird vorzugsweise ein gering vernetztes Material mit einer Glasübergangstemperatur unterhalb der Raumtemperatur eingesetzt. Das Material für die Elastomerschicht wird weiterhin vorzugsweise so ausgewählt, dass die Bruchdehnung mindestens zehnmal größer ist als die Bruchdehnung der Duromerschicht. Weiterhin weist die Elastomerschicht vorzugsweise ein elastisches Plateau über den Bereich der Nutzungstemperatur auf. Die Nutzungstemperatur ist dabei die Temperatur, bei der das Bauteil im Betrieb eingesetzt wird. In einer bevorzugten Ausführungsform enthält die Elastomerschicht bis zu 100 Gew.-% Polyharnstoff. Die Vorteile des Polyharnstoffs sind ein breiteres Verarbeitungsfenster aufgrund der hohen Eigenreaktivität, eine verbesserte Wärmebeständigkeit, bessere Hydrolysebeständigkeit und gute Kälteflexibilität im Vergleich zu Polyurethanen gleicher Härte sowie hervorragende Abriebseigenschaften. Copolymere aus Polyurethan und Polyharnstoff weisen die gleichen Vorteile, jedoch in abgeschwächter Ausprägung gegenüber reinen Polyurethanen auf.

Die Eigenschaften der Elastomerschicht lassen sich ebenso wie die Eigenschaften der Duromerschicht durch Zugabe von Additiven einstellen. Als Additive eignen sich auch hier zum Beispiel faser- oder pulverförmige Füllstoffe, Weichmacher, Schlagzähmodifizierer, Flammschutzmittel, Farbstoffe oder sonstige üblicherweise in Polymeren eingesetzte Additive, die dem Fachmann bekannt sind.

Das für die Elastomerschicht eingesetzte Elastomer wird vorzugsweise so ausgewählt, dass dieses eine Reißdehnung von mindestens 150%, weiter bevorzugt von mindestens 250% und insbesondere von mindestens 350% aufweist. Die geeignete maximale Reißdehnung liegt vorzugsweise bei 700%, da sich Elastomere mit höheren Reißdehnungen nur schwierig zum Schichtaufbau verarbeiten lassen. Die Bestimmung der Reißdehnung erfolgt nach DIN EN ISO 527:2012.

Die Shore-Härte der Elastomerschicht ist kleiner als 95 Shore A, bevorzugt maximal 85 Shore A und insbesondere maximal 80 Shore A, wobei die Shore-Härte nach DIN ISO 7619-1:2010 bestimmt wird.

Durch den Einsatz von Polyurethan, Polyisocyanurat oder Polyharnstoff werden für alle Schichten chemisch ähnliche Materialien verwendet, wodurch ein Recycling des Bauteils vereinfacht wird.

Bevorzugt ist es weiterhin, wenn für die einzelnen Schichten Materialien ohne Faserverstärkung eingesetzt werden. Hierdurch lässt sich die Verarbeitung vereinfachen. Insbesondere ist es nicht notwendig, Werkzeuge einzusetzen, die speziell auf die Verarbeitung von Fasern ausgelegt sind. Durch den Verzicht auf Fasern werden zudem die einzelnen Apparateteile weniger stark beansprucht, insbesondere wird die Abnutzung reduziert, die sich bei faserverstärkten Polymeren durch Abrieb aufgrund der eingesetzten Fasern ergibt. Ein weiterer Vorteil, der sich daraus ergibt, dass es nicht notwendig ist, Fasern einzusetzen, ist der Entfall von Faserabfällen, die zu einer Gesundheitsgefährdung durch Bildung von Stäuben führen können. Weiterhin zeigt das Bauteil kein anisotropes Verhalten, wenn keine orientierenden Füllstoffe wie Fasern verwendet werden.

Durch den erfindungsgemäßen Aufbau ist es möglich, auf den Einsatz von Composite-Materialien mit ähnlichen Eigenschaften zu verzichten. Hierdurch kann eine Gewichtsersparnis für das Bauteil erzielt werden. Zudem sind durch die Verwendung ähnlicher Materialien für die einzelnen Schichten kürzere Zykluszeiten bei der Herstellung möglich, Materialkosten können gesenkt werden, und es kann einfacheres, kombiniertes und damit günstigeres Dosierequipment verwendet werden. Ein weiterer Vorteil ist die Möglichkeit einer höheren Automatisierung und des einfacheren Aufbaus der Herstellvorrichtung.

Um die mechanischen Eigenschaften des Schichtaufbaus einzustellen, enthält in einer Ausführungsform mindestens eine der Schichten verstärkende Fasern oder Füllstoffe.

Als Fasern eignen sich zum Beispiel Glasfasern, Kohlenstofffasern, Aramidfasern, Kaliumtitanatfasern, mineralischeFasern oder Naturfasern. Die Fasern können dabei wie vorstehend für die Duromerschicht bereits beschrieben als Endlosfasern, Langfasern oder Kurzfasern vorliegen, wobei die Endlosfasern in Form von Fasergelegen, Gewirken, Gestricken, Geweben oder Vliesen eingesetzt werden.

Als verstärkende Füllstoffe werden insbesondere pulverförmige Füllstoffe, zum Beispiel Kreide, Kaolin, Talkum oder Glashohlkugeln, verstanden. Um anisotropes Verhalten zu vermeiden, ist es bevorzugt, wenn als Füllstoffe pulverförmige Füllstoffe und keine Fasern eingesetzt werden.

In einer bevorzugten Ausführungsform sind die einzelnen Schichten des Schichtaufbaus in folgender Reihenfolge angeordnet: gegebenenfalls Lackschicht, Elastomerschicht, Duromerschicht, gegebenenfalls Dämmschicht. Zusätzlich kann auf die Duromerschicht, wenn keine Dämmschicht vorgesehen ist, oder auf die Dämmschicht eine weitere Lackschicht aufgebracht werden. Die Elastomerschicht ist dabei auf der mechanisch beanspruchten Seite des Bauteils angeordnet. Hierdurch lässt sich eine gute Abriebsbeständigkeit erzielen, da die Elastomerschicht im Unterschied zu einer Duromerschicht beständiger gegen Abrieb ist.

In einer Ausführungsform der Erfindung umfasst die Duromerschicht eine erste Teilschicht und mindestens eine zweite Teilschicht, wobei die erste Teilschicht das erste Polyurethan enthält, wobei das erste Polyurethan geschäumt ist, und die mindestens eine zweite Teilschicht ein drittes Polyurethan enthält, wobei das dritte Polyurethan eine Dichte aufweist, die höher ist als die Dichte des ersten Polyurethans. Durch die zweite Teilschicht können bei Bedarf höhere Bauteilsteifigkeiten erhalten werden. Ebenso können Verformungen resultierend aus unterschiedlichem Materialschwund oder unterschiedlichen thermischen Ausdehnungkoeffizienten reduziert oder vermieden werden.

Wenn nur eine zweite Teilschicht vorgesehen ist, kann diese auf der der Elastomerschicht zugewandten Seite der ersten Teilschicht oder auf der der Elastomerschicht abgewandten Seite der ersten Teilschicht angeordnet sein. In einer weiteren Ausführungsform ist es auch möglich, dass jeweils eine zweite Teilschicht auf der der Elastomerschicht zugewandten Seite der ersten Teilschicht und eine zweite Teilschicht auf der der Elastomerschicht abgewandten Seite der ersten Teilschicht angeordnet ist.

Wenn eine Duromerschicht eingesetzt wird, die eine erste Teilschicht und mindestens eine zweite Teilschicht aufweist, ist es bevorzugt, wenn die erste Teilschicht eine Schichtdicke im Bereich von 1 bis 30 mm und jede zweite Teilschicht eine Schichtdicke im Bereich von 1 bis 10 mm aufweist. Besonders bevorzugt weist die erste Teilschicht eine Schichtdicke im Bereich von 2 bis 25 mm und insbesondere im Bereich von 3 bis 20 mm. Jede zweite Teilschicht weist besonders bevorzugt eine Schichtdicke im Bereich von 1 bis 8 mm auf und insbesondere eine Schichtdicke im Bereich von 1,5 bis 5 mm auf.

In einer bevorzugten Ausführungsform weist die Elastomerschicht eine Schichtdicke im Bereich von 0,2 bis 4 mm und die Duromerschicht eine Schichtdicke im Bereich von 2 bis 40 mm auf. Besonders bevorzugt ist es, wenn die Elastomerschicht eine Schichtdicke im Bereich von 0,5 bis 3,5 mm und insbesondere im Bereich von 1,0 bis 3 mm aufweist. Die Dicke der Duromerschicht liegt besonders bevorzugt im Bereich von 3 bis 30 mm und insbesondere im Bereich von 5 bis 25 mm. Die Dicke der Duromerschicht bedeutet dabei die gesamte Dicke der Duromerschicht, das heißt bei einem Aufbau mit einer ersten Teilschicht und mindestens einer zweiten Teilschicht die Summe der Schichtdicken aller Teilschichten.

Die Dicke der Elastomerschicht und der Duromerschicht ist dabei auch davon abhängig, wie das Bauteil eingesetzt werden soll. So kann zum Beispiel eine höhere Festigkeit durch eine größere Schichtdicke erhalten werden.

Einsatz findet ein Bauteil, das zumindest teilweise aus einem Schichtaufbau aufgebaut ist, zum Beispiel in Kühlgeräten als Ersatz von metallischen Bauteilen oder Bauteilen aus Composite-Materialien, zum Beispiel als Ersatz von Gehäuseteilen.

Ein weiterer Einsatzbereich sind Teile von Fahrzeugen, beispielsweise Exteriorteile, an die eine erhöhte Anforderung an Schlagzähigkeit und Energiedissipation gestellt wird, beispielsweise für den Fußgängerschutz oder bei der Verwendung in Baumaschinen oder landwirtschaftlichen Maschinen. Weiterhin kann durch eine Dämmschicht der Schichtaufbau in Motornähe oder anderen heißen Bereichen von Fahrzeugen verwendet werden. Durch die Verwendung des erfindungsgemäßen Schichtaufbaus lässt sich Gewicht einsparen, zudem ist es möglich, komplexe und große Bauteile herzustellen.

Neben Exteriorteilen können auch Interiorteile von Fahrzeugen, beispielsweise von Personen- und Lastkraftfahrzeugen, Eisenbahnwaggons, Straßenbahnen, Schiffen oder Flugzeugen, aus dem erfindungsgemäßen Schichtaufbau hergestellt werden. Durch den Schichtaufbau lässt sich ein abriebsfester, schwer entflammbarer Oberflächenaufbau realisieren.

Die Eigenschaften des fertigen Bauteils können durch Einsatz geeigneter Additive, beispielsweise Flammschutzmittel, Farbstoffe oder sonstiger üblicherweise in Polymeren eingesetzter Additive, in allen Polymerschichten des Bauteils oder selektiv ausgewählten Polymerschichten des Bauteils eingestellt werden. Entsprechende Additive sind dem Fachmann bekannt.

In einer weiteren Ausführungsform ist das Bauteil ein Separator in der Montanindustrie, beispielsweise ein Spiralseparator zur Trennung von Erzpartikeln hinsichtlich ihrer Größe und/oder Form. Durch die Elastomerschicht wird eine verbesserte Abriebsfestigkeit erzielt. Zudem lassen sich entsprechende Separatoren im Unterschied zu handverarbeiteten Composite-Tragestrukturen mit kürzeren Zykluszeiten und einem höheren Automatisierungsgrad herstellen.

Ein weiterer Einsatzbereich des Bauteils ist als Gehäuse für eine elektrische Vorrichtung, zum Beispiel als Transformatorgehäuse oder als Motorgondel für eine Windkraftanlage.

Abschließend können die Bauteile auch als Sportgeräte oder Sanitärobjekte, beispielsweise Badewannen, Duschwannen, Whirlpools, Swimmingpools oder Waschbecken, eingesetzt werden.

Unabhängig vom Einsatz ist durch die Verwendung des erfindungsgemäßen Schichtaufbaus eine größere Freiheit hinsichtlich Geometrie, Form und Oberflächenstruktur gegeben als bei herkömmlichen Materialien gegeben. Zudem lassen sich Bauteile direkt während der Fertigung integrieren, so dass weniger Verbindungen notwendig sind und eine höhere Dichtigkeit erzielt werden kann. Auch lässt sich das Bauteil anwendungsspezifisch konfigurieren, beispielsweise durch eine selektive Fertigung.

Hergestellt wird das Bauteil besonders bevorzugt durch ein Verfahren umfassend die Schritte:
(i) Bereitstellen einer Negativform, in die die einzelnen Schichten des Schichtaufbaus eingebracht werden, oder einer Positivform, auf die die einzelnen Schichten des Schichtaufbaus aufgebracht werden,
(ii) Herstellen der Elastomerschicht durch Sprühen,
(iii) Herstellen der Duromerschicht durch Sprühen,
(iv) Entformen des hergestellten Bauteils,
wobei Schritt (ii) vor Schritt (iii) oder Schritt (iii) vor Schritt (ii) durchgeführt werden kann.

Durch das Sprühen zur Herstellung der Elastomerschicht und der Duromerschicht lässt sich ein Nass-in-nass-Auftrag realisieren, durch den eine besonders gute Haftung zwischen den Schichten erhalten wird. Ein weiterer Vorteil der Herstellung durch Sprühen ist, dass eine gleichmäßige Schichtdicke erzeugt werden kann. Zudem wird durch das Aufsprühen das Material einer unter der aktuell zu fertigenden Schicht nicht verschoben. Ein weiterer Vorteil ist, dass eine offene Form genutzt werden kann und nicht für jede Schicht eine neue Form benötigt wird. Es ist ausreichend, eine Negativform bereitzustellen, in die die Schichten eingebracht werden oder alternativ eine Positivform, auf die die Schichten aufgetragen werden. Verarbeitungsschritte wie Stanzen, Biegen, Bohren, Lackieren, Schleifen, Entfetten, Löten, Schweißen, Kleben und weitere Vorbereitungsschritte (von Metalldeckschichten) können entfallen. Auch kann individuell, entsprechend des Anwendungsgebiets und der Belastung die Elastomer- und/oder Duromerschicht über das gesamte Bauteil oder in bestimmten Bereichen in einer höheren Schichtdicke aufgetragen werden. Eine größere Schichtdicke kann dabei zum Beispiel durch einen größeren Materialdurchsatz beim Sprühen oder durch längere Sprühzeiten realisiert werden. Bevorzugt ist es jedoch zur Erzeugung größerer Schichtdicken mehrere Einzelschichten aus dem gleichen Material aufzusprühen, wobei sich die Einzelschichten nach dem Sprühen miteinander zu einer durchgehenden Schicht verbinden.

Alternativ zum Herstellen des Schichtaufbaus durch Sprühen der einzelnen Schichten ist es auch möglich, den Schichtaufbau durch sequentielle Gießprozesse oder durch eine Kombination aus Sprüh- und Gießprozessen herzustellen. Dies hat jedoch gegenüber einer Herstellung nur durch Sprühen der einzelnen Schichten den Nachteil, dass mehrere Formschritte mit multiplen Formen oder Formumbauten notwendig sind.

Wenn zusätzlich zur Duromerschicht und Elastomerschicht eine Lackschicht vorgesehen ist, wird in einer Ausführungsform in einem ersten Schritt eine Lackschicht auf die Negativform oder Positivform aufgebracht. In diesem Fall ist es weiterhin bevorzugt, wenn das Material für die Lackschicht ein Trennmittel enthält, um ein einfaches Entformen zu ermöglichen. Wenn zuerst eine Lackschicht auf die Negativform oder Positivform aufgebracht wird, so wird diese vorzugsweise ebenfalls durch Sprühen aufgebracht.

In einer weiteren Ausführungsform wird zusätzlich nach dem Erzeugen der Elastomerschicht und der Duromerschicht eine Lackschicht auf das Bauteil aufgebracht. Die Lackschicht kann dabei vor dem Entformen oder nach dem Entformen auf das Bauteil aufgebracht werden. Wenn die Lackschicht nach dem Entformen aufgebracht wird, ist es möglich, auf das Aufbringen der Lackschicht auf die Negativform oder Positivform zu verzichten, da in diesem Fall zum Aufbringen der Lackschicht alle Flächen des Bauteils frei zugänglich sind. Es ist jedoch trotzdem möglich, eine Lackschicht auf die Negativform oder Positivform aufzubringen und eine weitere Lackschicht - vor allem an den nicht lackierten Bereichen - nach dem Entformen aufzubringen.

Wenn zusätzlich eine Dämmschicht aus Hartschaum eingesetzt wird, kann diese entweder ebenfalls durch Sprühen aufgebracht werden oder alternativ in eine geschlossene Form gegossen werden. Zum Aufschäumen können sowohl chemische als auch physikalische Treibmittel eingesetzt werden. Chemische Treibmittel enthalten im Allgemeinen zwei unterschiedliche Komponenten, die unter Wärmeeinwirkung beginnen chemisch miteinander zu reagieren und dabei ein Gas zu bilden. Durch die Gasbildung wird das Polymer aufgeschäumt. Ein physikalisches Treibmittel ändert seine Struktur nicht und kann entweder als unter Druck stehendes Gas im Polymer enthalten sein oder in Form einer Flüssigkeit. Wenn das physikalische Treibmittel als unter Druck stehendes Gas enthalten ist, dehnt sich dieses aus, sobald das Polymer erweicht wird, wobei sich der Schaum bildet. Ein als Flüssigkeit eingesetztes Treibmittel wird unter Wärmeeinwirkung verdampft und führt so zu einem Aufschäumen des Polymers.

Wenn eine Dämmschicht vorgesehen ist, so wird diese entweder vor dem Einbringen der Elastomerschicht und der Duromerschicht in die Form eingebracht oder alternativ nach dem Einbringen der Elastomerschicht und der Duromerschicht. Wenn mehr als eine Duromerschicht und mehr als eine Elastomerschicht vorgesehen sind, kann die Dämmschicht auch zwischen zwei Verbunden aus Elastomerschicht und Duromerschicht angeordnet werden. Bevorzugt wird die Elastomerschicht jedoch als eine der äußeren Schichten entweder zwischen Duromerschicht und Lackschicht oder, wenn keine Lackschicht vorgesehen ist, als abschließende Schicht auf der Duromerschicht. Bevorzugt wird die Dämmschicht auf die Duromerschicht aufgetragen.

Um das Bauteil gut entformen zu können, ist es möglich, vor dem Einbringen der einzelnen Schichten ein Trennmittel auf die Positivform oder die Negativform aufzutragen.

Um die Haftung zwischen den einzelnen Schichten zu verbessern, gegebenenfalls auftretende Spannungen zu reduzieren und eine vollständige Aushärtung zu gewährleisten, ist es weiterhin möglich, das Bauteil vor dem Entformen oder nach dem Entformen zu erwärmen. Durch eine Erwärmung können im Allgemeinen die mechanischen Eigenschaften, die thermischen Eigenschaften der einzelnen Schichten und der gesamten Struktur noch weiter verbessert werden.

Neben dem Erzeugen eines eigenständigen Schichtaufbaus ist es alternativ auch möglich, die einzelnen Schichten nachträglich auf eine bestehende Struktur aufzubringen. In diesem Fall wird bevorzugt erst die Dämmschicht, sofern eine vorgesehen ist, dann die Duromerschicht, als drittes die Elastomerschicht und abschließend die Lackschicht, sofern eine vorgesehen ist, aufgebracht. Dabei ist es möglich, mehrere Elastomerschichten und Duromerschichten wechselweise aufzutragen.

Das erfindungsgemäße Verfahren erlaubt weiterhin, Bauelemente in die einzelnen Lagen oder zwischen zwei Lagen zu integrieren. Entsprechende Bauteile sind zum Beispiel Füße, Verschraubungselemente, beispielsweise um später Griffe, Beine etc. anzuschrauben, Abdeckungselemente für Generatoren oder Kältemaschinen, dekorative Materialien oder Logos.

Abschließend besteht die Möglichkeit vor oder nach dem Entformen eine mechanische oder thermische Formkorrektur, beispielsweise durch Zuschneiden, vorzunehmen.

### Beispiele

Für die Beispiele wurde jeweils ein Schichtaufbau durch sequentielles Sprühen einer Lackschicht, einer Elastomerschicht und einer Duromerschicht hergestellt, wobei für einzelne Beispiele als Vergleich auf die Lackschicht und/oder auf die Elastomerschicht verzichtet wurde. Als letzter Schritt wurde der Schichtaufbau in ein Formwerkzeug gelegt und mit einem Hartschaum im geschlossenen Formwerkzeug beschichtet. Aus dem so hergestellten Bauteil wurden quadratische Probekörper mit einer Seitenlänge von 4 cm gesägt.

Durch einen Kugelfalltest wurde die Stoßfestigkeit der Probekörper ermittelt. Der Durchmesser der kugelförmigen Spitze des Fallgewichts betrug 20 mm. Die Probekörper wurden im Kugelfalltest mit 30 Joule belastet. Der Einschlag des Probekörpers erfolgte auf der dem Hartschaum abgewandten Seite.

Für den Schichtaufbau der einzelnen Beispiele wurden folgende Materialien eingesetzt:

### Lackschicht:

Ein handelsüblicher hochfester, lösungsmittelfreier, Zwei-Komponenten-Gellack auf Polyurethan/Polyharnstoff-Copolymer-Basis mit einer Härte von mehr als 70 Shore D.

### Elastomer A:

Ein Sprüh-Polyurethan/Polyharnstoff-Copolymer mit 10 Gew.-% oberflächenbeschichtetem Calciumcarbonat mit einer mittleren Partikelgröße d50 von 3 µm und d98 von 15 µm und mit einer Härte von 95 Shore A und 46 Shore D, jeweils gemessen nach DIN ISO 7619-1:2010, einer Dichte von 1100 kg/m³ gemessen nach DIN EN ISO 1183-1:2013, einer Zugfestigkeit von 14 MPa, einer Reißdehnung nach DIN EN ISO 527:2012 von 100% und einem Weiterreißwiderstand nach DIN ISO 34-1:2004 von 53 N/mm.

### Elastomer B:

Ein Sprüh-Polyurethan-Polyharnstoff-Copolymer mit 10 Gew.-% oberflächenbeschichtetem Calciumcarbonat mit einer mittleren Partikelgröße d50 von 3 µm und d98 von 15 µm und mit einer Härte von 77 Shore A gemessen nach DIN ISO 7619-1:2010, einer Dichte von 1060 kg/m³ gemessen nach DIN EN ISO 1183-1:2013, einer Zugfestigkeit von 8 MPa, einer Reißdehnung nach DIN EN ISO 527:2012 von 460% und einem Weiterreißwiderstand nach DIN ISO 34-1:2004 von 20 N/mm.

### Duromer A:

Ein Sprüh-Polyurethan-Polyharnstoff-Copolymer mit 20 Gew.-% Kreide und mit einer Härte von 63 Shore D gemessen nach DIN ISO 7619-1:2010, einem Raumgewicht von 600 kg/m³ gemessen nach DIN EN ISO 845:2009, einem 3-Punkt-Biege-E-Modul von 870 MPa, einer Biegefestigkeit von 21 MPa, einer Durchbiegung von 7 mm, jeweils bestimmt nach DIN EN ISO 178:2010 und DIN EN ISO 178 A1:2013, und einer Glasübergangstemperatur von mehr als 70°C.

### Duromer B:

Ein Sprühpolyurethan mit 15 Gew.-% Schnittglasfaser mit einer Faserlänge von 8 mm und mit einem Raumgewicht von 850 kg/m³ gemessen nach DIN EN ISO 845:2009, einer Zugfestigkeit von 32 MPa, einer Reißdehnung von 2% nach DIN EN ISO 527:2012 und einer Glasübergangstemperatur von mehr als 70°C.

Als Hartschaum wurde Elastocool® 2030/13/OT der BASF Polyurethanes GmbH verwendet.

In Tabelle 1 sind die Kugelfalltest-Ergebnisse für verschiedene Schichtaufbauten dargestellt. Beispiele 1 bis 6 sind Vergleichsbeispiele.

**Tabelle 1: Ergebnisse des Kugelfalltests**

| Nr. | Schichtaufbau (mm) | | Ergebnis Kugelfalltest |
|---|---|---|---|
| | Schicht | Schichtstärke in mm | |
| Beispiel 1 | Elastomer A | 2.35 | Nicht bestanden |
| | Duromer A | 4.60 | |
| | Hartschaum | 40.00 | |
| Beispiel 2 | Lackschicht | 0.15 | Nicht bestanden |
| | Elastomer A | 1.60 | |
| | Duromer A | 7.20 | |
| | Hartschaum | 40.00 | |
| Beispiel 3 | Duromer A | 6.30 | Nicht bestanden |
| | Hartschaum | 40.00 | |
| Beispiel 4 | Lackschicht | 0.20 | Nicht bestanden |
| | Elastomer A | 2.4 | |
| | Duromer B | 4.60 | |
| | Hartschaum | 40.00 | |
| Beispiel 5 | Duromer B | 6.30 | Nicht bestanden |
| | Hartschaum | 40.00 | |
| Beispiel 6 | Lackschicht | 0.20 | Nicht bestanden |
| | Duromer B | 6.30 | |
| | Hartschaum | 40.00 | |
| Beispiel 7 | Elastomer B | 2.35 | Bestanden |
| | Duromer A | 3.90 | |
| | Hartschaum | 43.40 | |
| Beispiel 8 | Lackschicht | 0.20 | Bestanden |
| | Elastomer B | 2.30 | |
| | Duromer A | 4.00 | |
| | Hartschaum | 40.00 | |
| Beispiel 9 | Lackschicht | 0.20 | Bestanden |
| | Elastomer B | 2.3 | |
| | Duromer B | 4.00 | |
| | Hartschaum | 40.00 | |
| Beispiel 10 | Elastomer B | 2.3 | Bestanden |
| | Duromer B | 4.00 | |
| | Hartschaum | 40.00 | |

Als bestanden wurde der Kugelfalltest bewertet, wenn nach der Belastung mit 30 Joule keine oder nur leichte Abzeichnungen des Fallgewichts zu erkennen waren, im Elastomer keine Risse und im Duromer Risse mit einer Länge von weniger als 2 cm aufgetreten sind, wobei die Risse im Duromer nicht schichtübergreifend waren.

Als nicht bestanden wurde der Kugelfalltest gewertet, wenn eines der nachfolgenden Kriterien aufgetreten ist:
- der Schichtaufbau aus Duromerschicht, gegebenenfalls Elastomerschicht und gegebenenfalls Lackschicht zeigte Risse in allen Schichten,
- zusätzlich zu den Rissen wurde der Hartschaum irreversibel verformt,
- es traten Risse in der Lackschicht auf und die Abzeichnung des Fallgewichts ist optisch zu erkennen,
- im Duromer ist ein Riss mit einer Länge von mehr als 2 cm aufgetreten,
- im Elastomer sind deutliche Risse mit einer Länge von mehr als 1 cm zu erkennen,
- der Schichtaufbau aus Duromerschicht, gegebenenfalls Elastomerschicht und gegebenenfalls Lackschicht zeigt keine Risse, aber der Hartschaum wurde irreversibel so verformt, dass dies zu einer optischen Abzeichnung im Bauteil führt oder zu einer irreversiblen Ablösung der Schichten von dem darunter liegen Hartschaum.

Aus den Beispielen ist deutlich zu erkennen, dass das Weglassen der Lackschicht keinen Einfluss auf die Ergebnisse der Stoßbeanspruchung zeigt, jedoch zwingend eine Elastomerschicht vorgesehen sein muss. Zudem haben auch die physikalischen Eigenschaften der Elastomerschicht einen Einfluss auf die Ergebnisse der Stoßbeanspruchung.

## Patentansprüche

1. Bauteil, das zumindest teilweise aus einem Schichtaufbau aufgebaut ist, wobei der Schichtaufbau folgende Schichten umfasst:
(a) eine Elastomerschicht mit einer Dichte von mehr als 800 g/L,
(b) eine Duromerschicht, enthaltend mindestens 50 Gew.-% eines ersten Polyurethans,
wobei die Elastomerschicht eine Shore-Härte nach DIN ISO 7619-1:2010 von weniger als 95 Shore A aufweist.

2. Bauteil nach Anspruch 1, **dadurch gekennzeichnet, dass** die Duromerschicht geschäumt ist und eine Dichte von weniger als 600 g/L aufweist oder dass die Duromerschicht kompakt ist und eine Dichte von mehr als 800 g/L aufweist.

3. Bauteil nach Anspruch 1 oder 2, **dadurch gekennzeichnet, dass** der Schichtaufbau zusätzlich eine Dämmschicht umfasst und die Dämmschicht aus einem Hartschaum aufgebaut ist, der mindestens 80 Gew.-% Polyisocyanurat und/oder zweites Polyurethan enthält.

4. Bauteil nach einem der Ansprüche 1 bis 3, **dadurch gekennzeichnet, dass** die Elastomerschicht eine Reißdehnung nach DIN EN ISO 527:2012 von mindestens 150% aufweist.

5. Bauteil nach einem der Ansprüche 1 bis 4, **dadurch gekennzeichnet, dass** der Schichtaufbau zusätzlich mindestens eine Lackschicht umfasst.

6. Bauteil nach einem der Ansprüche 1 bis 5, **dadurch gekennzeichnet, dass** die Elastomerschicht aus einem Material aufgebaut ist, das ausgewählt ist aus der Gruppe bestehend aus Homopolyurethan, Homopolyharnstoff und Copolymeren, enthaltend Polyurethan und Polyharnstoff.

7. Bauteil nach einem der Ansprüche 1 bis 6, **dadurch gekennzeichnet, dass** die einzelnen Schichten in folgender Reihenfolge angeordnet sind: gegebenenfalls Lackschicht, Elastornerschicht, Duromerschicht, gegebenenfalls Dämmschicht.

8. Bauteil nach einem der Ansprüche 2 bis 7, **dadurch gekennzeichnet, dass** die Duromerschicht eine erste Teilschicht und mindestens eine zweite Teilschicht umfasst, wobei die erste Teilschicht das erste Polyurethan enthält, wobei das erste Polyurethan geschäumt ist, und die mindestens eine zweite Teilschicht ein drittes Polyurethan enthält, wobei das dritte Polyurethan eine Dichte aufweist, die höher ist als die Dichte des ersten Polyurethans.

9. Bauteil nach Anspruch 8, **dadurch gekennzeichnet, dass** eine zweite Teilschicht auf der der Elastomerschicht zugewandten Seite der ersten Teilschicht angeordnet ist und/oder eine zweite Teilschicht auf der der Elastomerschicht abgewandten Seite der ersten Teilschicht angeordnet ist.

10. Bauteil nach Anspruch 8 oder 9, **dadurch gekennzeichnet, dass** die erste Teilschicht eine Schichtdicke im Bereich von 1 bis 30 mm und jede zweite Teilschicht eine Schichtdicke im Bereich von 1 bis 10 mm aufweist.

11. Bauteil nach einem der Ansprüche 1 bis 10, **dadurch gekennzeichnet, dass** die Elastomerschicht bis zu 100 Gew.-% Polyharnstoff enthält.

12. Bauteil nach einem der Ansprüche 1 bis 11, **dadurch gekennzeichnet, dass** die Elastomerschicht eine Schichtdicke im Bereich von 0,2 bis 4 mm und die Duromerschicht eine Schichtdicke im Bereich von 2 bis 40 mm aufweist.

13. Bauteil nach einem der Ansprüche 1 bis 12, **dadurch gekennzeichnet, dass** mindestens eine der Schichten verstärkende Fasern oder Füllstoffe enthält.

14. Bauteil nach einem der Ansprüche 1 bis 13, wobei das Bauteil ein Separator zur Anwendung im Bergbau, eine Kühlvorrichtung oder ein Gehäuse für eine elektrische Vorrichtung ist, oder Teil eines Fahrzeugs, eines Sportgeräts oder einer Sanitärvorrichtung ist.

15. Verfahren zur Herstellung eines Bauteils nach einem der Ansprüche 1 bis 14 umfassend die Schritte:
(i) Bereitstellen einer Negativform, in die die einzelnen Schichten des Schichtaufbaus eingebracht werden, oder einer Positivform, auf die die einzelnen Schichten des Schichtaufbaus aufgebracht werden,
(ii) Herstellen der Elastomerschicht durch Sprühen,
(iii) Herstellen der Duromerschicht durch Sprühen,
(iv) Entformen des hergestellten Bauteils,
wobei Schritt (ii) vor Schritt (iii) oder Schritt (iii) vor Schritt (ii) durchgeführt werden kann.

16. Verfahren nach Anspruch 15, **dadurch gekennzeichnet, dass** in einem ersten Schritt eine Lackschicht auf die Negativform oder Positivform aufgebracht wird.

17. Verfahren nach Anspruch 15 oder 16, **dadurch gekennzeichnet, dass** vor dem Entformen oder nach dem Entformen eine Lackschicht auf das Bauteil aufgebracht wird.

18. Verfahren nach einem der Ansprüche 15 bis 17, **dadurch gekennzeichnet, dass** das Bauteil vor oder nach dem Entformen erwärmt wird.

19. Verfahren nach einem der Ansprüche 15 bis 18, **dadurch gekennzeichnet, dass** zusätzlich eine Dämmschicht durch Sprühen oder Gießen aufgebracht wird.

## Claims

1. A component composed at least to some extent of a layer structure, where the layer structure comprises the following layers:
(a) an elastomer layer with density greater than 800 g/L,
(b) a thermoset layer comprising at least 50% by weight of a first polyurethane,
where the shore hardness of the elastomer layer is less than 95 shore A in accordance with DIN ISO 7619-1:2010.

2. The component according to claim 1, wherein the thermoset layer has been foamed and the density thereof is less than 600 g/L, or wherein the thermoset layer is compact and the density thereof is greater than 800 g/L.

3. The component according to claim 1 or 2, wherein the layer structure also comprises an insulating layer, and the insulating layer is composed of a rigid foam which comprises at least 80% by weight of polyisocyanurate and/or second polyurethane.

4. The component according to any of claims 1 to 3, wherein the tensile strain at break of the elastomer layer is at least 150% in accordance with DIN EN ISO 527:2012.

5. The component according to any of claims 1 to 4, wherein the layer structure also comprises at least one layer of coating material.

6. The component according to any of claims 1 to 5, wherein the elastomer layer is composed of a material selected from the group consisting of homopolyurethane, homopolyurea, and copolymers comprising polyurethane and polyurea.

7. The component as claimed in any of claims 1 to 6, wherein the arrangement has the individual layers in the following sequence: optionally layer of coating material, elastomer layer, thermoset layer, optionally insulating layer.

8. The component according to any of claims 2 to 7, wherein the thermoset layer comprises a first sublayer and at least one second sublayer, where the first sublayer comprises the first polyurethane, where the first polyurethane has been foamed, and the at least one second sublayer comprises a third polyurethane, where the density of the third polyurethane is higher than the density of the first polyurethane.

9. The component according to claim 8, wherein the arrangement has a second sublayer on that side of the first sublayer that faces toward the elastomer layer, and/or the arrangement has a second sublayer on that side of the first sublayer that faces away from the elastomer layer.

10. The component according to claim 8 or 9, wherein the thickness of the first sublayer is in the range from 1 to 30 mm, and the thickness of each second sublayer is in the range from 1 to 10 mm.

11. The component according to any of claims 1 to 10, wherein the elastomer layer comprises up to 100% by weight of polyurea.

12. The component according to any of claims 1 to 11, wherein the thickness of the elastomer layer is in the range from 0.2 to 4 mm and the thickness of the thermoset layer is in the range from 2 to 40 mm.

13. The component according to any of claims 1 to 12, wherein at least one of the layers comprises reinforcing fibers or fillers.

14. The component according to any of claims 1 to 13, where the component is a separator for use in mining, a cooling device or a housing for an electrical device, or part of a vehicle, of sports equipment, or of a sanitary device.

15. A process for the production of a component according to any of claims 1 to 14 comprising the following steps:
(i) provision of a female mold into which the individual layers of the layer structure are introduced, or of a male mold to which the individual layers of the layer structure are applied,
(ii) production of the elastomer layer via spraying,
(iii) production of the thermoset layer via spraying,
(iv) demolding of the resultant component,
where step (ii) can be carried out before step (iii) or step (iii) can be carried out before step (ii).

16. The process according to claim 15, wherein in a first step a layer of coating material is applied to the female mold or male mold.

17. The process according to claim 15 or 16, wherein a layer of coating material is applied to the component before the demolding process or after the demolding process.

18. The process according to any of claims 15 to 17, wherein the component is heated before or after the demolding process.

19. The process according to any of claims 15 to 18, wherein an insulating layer is also applied via spraying or casting.

## Revendications

1. Pièce, qui est constituée au moins partiellement par une structure stratifiée, la structure stratifiée comprenant les couches suivantes :
(a) une couche d'élastomère présentant une densité supérieure à 800 g/l,
(b) une couche de plastique thermodurcissable, contenant au moins 50% en poids d'un premier polyuréthane,
la couche d'élastomère présentant une dureté Shore selon la norme DIN ISO 7619-1:2010 inférieure à 95 Shore A.

2. Pièce selon la revendication 1, **caractérisée en ce que** la couche de plastique thermodurcissable est moussée et présente une densité inférieure à 600 g/l ou **en ce que** la couche de plastique thermodurcissable est compacte et présente une densité supérieure à 800 g/l.

3. Pièce selon la revendication 1 ou 2, **caractérisée en ce que** la structure stratifiée comprend en outre une couche isolante et la couche isolante est constituée par une mousse dure qui contient au moins 80% en poids de polyisocyanurate et/ou de deuxième polyuréthane.

4. Pièce selon l'une quelconque des revendications 1 à 3, **caractérisée en ce que** la couche d'élastomère présente un allongement à la rupture selon la norme DIN EN ISO 527:2012 d'au moins 150%.

5. Pièce selon l'une quelconque des revendications 1 à 4, **caractérisée en ce que** la structure stratifiée comprend en outre au moins une couche de laque.

6. Pièce selon l'une quelconque des revendications 1 à 5, **caractérisée en ce que** la couche d'élastomère est constituée par une matière qui est choisie dans le groupe constitué par l'homopolyuréthane, l'homopolyurée et les copolymères contenant du polyuréthane et de la polyurée.

7. Pièce selon l'une quelconque des revendications 1 à 6, **caractérisée en ce que** les différentes couches sont disposées dans l'ordre suivant : le cas échéant couche de laque, couche d'élastomère, couche de plastique thermodurcissable, le cas échéant couche isolante.

8. Pièce selon l'une quelconque des revendications 2 à 7, **caractérisée en ce que** la couche de plastique thermodurcissable comprend une première couche partielle et au moins une deuxième couche partielle, la première couche partielle contenant le premier polyuréthane, le premier polyuréthane étant moussé et ladite au moins une deuxième couche partielle contenant un troisième polyuréthane, le troisième polyuréthane présentant une densité qui est supérieure à la densité du premier polyuréthane.

9. Pièce selon la revendication 8, **caractérisée en ce qu'**une deuxième couche partielle est disposée sur la face orientée vers la couche d'élastomère de la première couche partielle et/ou une deuxième couche partielle est disposée sur la face opposée à la couche d'élastomère de la première couche partielle.

10. Pièce selon la revendication 8 ou 9, **caractérisée en ce que** la première couche partielle présente une épaisseur de couche dans la plage de 1 à 30 mm et chaque deuxième couche partielle présente une épaisseur de couche dans la plage de 1 à 10 mm.

11. Pièce selon l'une quelconque des revendications 1 à 10, **caractérisée en ce que** la couche d'élastomère contient jusqu'à 100% en poids de polyurée.

12. Pièce selon l'une quelconque des revendications 1 à 11, **caractérisée en ce que** la couche d'élastomère présente une épaisseur de couche dans la plage de 0,2 à 4 mm et la couche de plastique thermodurcissable présente une épaisseur de couche dans la plage de 2 à 40 mm.

13. Pièce selon l'une quelconque des revendications 1 à 12, **caractérisée en ce qu'**au moins une des couches contient des fibres ou des charges de renforcement.

14. Pièce selon l'une quelconque des revendications 1 à 13, la pièce étant un séparateur pour l'utilisation dans l'exploitation minière, un dispositif de refroidissement ou un boîtier pour un dispositif électrique ou une partie d'un véhicule, d'un appareil de sport ou d'un dispositif sanitaire.

15. Procédé pour la fabrication d'une pièce selon l'une quelconque des revendications 1 à 14, comprenant les étapes :
(i) préparation d'une forme négative, dans laquelle les différentes couches de la structure stratifiée sont introduites, ou d'une forme positive, sur laquelle les différentes couches de la structure stratifiée sont appliquées,
(ii) réalisation de la couche d'élastomère par pulvérisation,
(iii) réalisation de la couche de plastique thermodurcissable par pulvérisation,
(iv) démoulage de la pièce fabriquée,
l'étape (ii) pouvant être réalisée avant l'étape (iii) ou l'étape (iii) pouvant être réalisée avant l'étape (ii) .

16. Procédé selon la revendication 15, **caractérisé en ce que**, dans une première étape, une couche de laque est appliquée sur la forme négative ou sur la forme positive.

17. Procédé selon la revendication 15 ou 16, **caractérisé en ce qu'**une couche de laque est appliquée sur la pièce avant ou après le démoulage.

18. Procédé selon l'une quelconque des revendications 15 à 17, **caractérisé en ce que** la pièce est chauffée avant ou après le démoulage.

19. Procédé selon l'une quelconque des revendications 15 à 18, **caractérisé en ce qu'**en outre une couche isolante est appliquée par pulvérisation ou coulage.
